# EUROPÄISCHE PATENTANMELDUNG

(11) **EP 4 235 139 A2**
(43) Veröffentlichungstag der Anmeldung: **30.08.2023**
(21) Anmeldenummer: 23173189.4
(22) Anmeldetag: 13.02.2018
(51) Int. Cl.: G01M 17/00

(54) **VORRICHTUNG UND VERFAHREN ZUM KALIBRIEREN VON FAHRZEUG-ASSISTENZ-SYSTEMEN**

(30) Priorität: 27.02.2017 DE 102017203155
(62) Teilanmeldung aus: 18708916.4
(71) Anmelder: Robert Bosch GmbH, 70442 Stuttgart (DE)
(72) Erfinder: Barcin, Buelent, 73230 Kirchheim / Jesingen (DE)

(57) **Zusammenfassung**

Eine Kalibriervorrichtung (6; 18) zum Kalibrieren von Fahrzeug-Assistenz-Systemen umfasst: wenigstens ein Targetmuster (8; 8a-8d); wenigstens einen Sensor (10; 20), der ausgebildet ist, die Position und Orientierung eines zu vermessenden Fahrzeugs (4) in Bezug auf die Kalibriervorrichtung (6; 18) zu detektieren; und eine Positionierungsvorrichtung (14; 24), die ausgebildet ist, das wenigstens eine Targetmuster (8; 8a-8d) auf Grundlage der von dem wenigstens einen Sensor (10; 20) detektierten Position des zu vermessenden Fahrzeugs (4) so zu positionieren, dass das wenigstens eine Targetmuster (8; 8a-8d) in Bezug auf das zu vermessende Fahrzeug (4) in einer vorgegebenen Orientierung an einer vorgegebenen Position angeordnet ist.

## Beschreibung

Die Erfindung betrifft eine Vorrichtung und ein Verfahren zum Kalibrieren von Fahrzeug-Assistenz-Systemen (FAS), insbesondere zum Erfassen der Position, Winkel und Lage von Fahrzeugen für die FAS-Kalibrierung.

### Stand der Technik

Kraftfahrzeuge verfügen zunehmend über Fahrerassistenzsysteme (FAS), beispielsweise über einen Spurhalteassistenten, eine Spurwechselwarnung ("lane change warning"), über eine Spurverlassenswarnung ("lane departure warning"), über eine Wärmebildkamera ("night vision") und/oder über eine Einparkhilfe.

Insbesondere bei optischen, d.h. kamerabasierten, Fahrerassistenzsystemen ist es erforderlich, dass die wenigstens eine Kamera des Fahrerassistenzsystems ein präzises, mit der Realität übereinstimmendes und korrekt auf das Fahrzeug ausgerichtetes Bild der Umgebung liefert. Hierfür müssen alle Kameras des Fahrerassistenzsystems kalibriert werden.

Bei der statischen Kalibrierung bspw. einer Frontkamera werden Messtafeln ("Kalibriertafeln"), die ein optisches Muster ("Targetmuster") aufweisen, verwendet, beispielsweise um ein Fahrerassistenzsystem mittels Kalibriertools ("FAS-Kalibriertools") in Bezug auf die Hinterachse eines Fahrzeugs auszurichten. Das Ausrichten umfasst insbesondere, den Abstand, den Gier, Roll- und den Nickwinkel korrekt einzustellen. Die Messtafeln müssen links und rechts mittig zum Fahrzeug und rechtwinklig zur Längsfahrachse des Fahrzeugs ausgerichtet werden, damit mit einem entsprechenden Abstand zum Kalibriersystem das FAS kalibriert werden kann.

Das Ausrichten der Messtafeln muss mit großer Präzision erfolgen. Manuelles Ausrichten der Messtafeln ist daher aufwendig und erfordert viel Sorgfalt und Erfahrung. Darüber hinaus ist ein Messplatz mit einem nivellierten Boden erforderlich, um Abweichungen in der Höhe zu vermeiden.

Ferner gibt es fahrzeugspezifische FAS bspw. Frontkamerasysteme, die eine dynamische Kalibierfahrt benötigen. Hierzu wird das Fahrzeug, z.B. mit Hilfe eines Diagnosegerätes, in einen Kalibriermodus gebracht und mittels realer Fahrt mit konstanter Geschwindigkeit in Fahrspuren auf der Straße eingelernt. Die dynamische Kalibrierfahrt ist sehr aufwändig, zeitintensiv und in den Ballungsgebieten schwierig darzutellen.

Von einigen Herstellern wird eine Kombination aus statischen und dynamischen Kalibrierungen vorgeschrieben, die sich aus den beiden Kalibriermethoden zusammensetzt.

Es ist eine Aufgabe der Erfindung, die Kalibrierung von Fahrzeug-Assistenz-Systemen zu vereinfachen.

### Offenbarung der Erfindung

Gemäß einem Ausführungsbeispiel der Erfindung umfasst eine Kalibriervorrichtung zum Kalibrieren von Fahrzeug-Assistenz-Systemen wenigstens ein Targetmuster; wenigstens einen Sensor, der ausgebildet ist, die Position und die Orientierung eines zu vermessenden Fahrzeugs in Bezug auf die Kalibriervorrichtung zu detektieren; und einer Positionierungsvorrichtung, die ausgebildet ist, dass wenigstens eine Targetmuster auf Grundlage der von dem wenigstens einen Sensor detektierten Position des zu vermessenden Fahrzeugs so zu positionieren, dass das wenigstens eine Targetmuster in Bezug auf das zu vermessende Fahrzeug in einer vorgegebenen Orientierung an einer vorgegebenen Position angeordnet ist.

Ein Verfahren zum Kalibrieren von Fahrzeug-Assistenz-Systemen umfasst gemäß einem Ausführungsbeispiel der Erfindung:
(a) eine Kalibriervorrichtung nach einem Ausführungsbeispiel der Erfindung vor einem zu vermessenden Fahrzeug zu positionieren;
(b) die Position und Orientierung des Fahrzeugs in Bezug auf die Kalibriervorrichtung mit Hilfe des wenigstens einen Sensors zu bestimmen; und
(c) das wenigstens eine Targetmuster so zu positionieren, dass es in Bezug auf das Fahrzeug in einer vorgegebenen Orientierung an einer vorgegebenen Position angeordnet ist.

Das Targetmuster kann ein statisches (Target-)muster sein, wie es für eine statische Kalibrierung benötigt wird. Das Targetmuster kann aber auch ein veränderliches, dynamisches (Target-)muster, insbesondere eine Fahrspursequenz (Videosequenz) sein, das in Kombination mit einem Rollenprüfstand eine dynamische Kalibrierung des FAS ermöglicht. Ausführungsbeispiele der Erfindung umfassen daher auch eine Kombination aus einem Rollenprüfstand und einer Kalibriervorrichtung gemäß einem Ausführungsbeispiel der Erfindung.

Die Erfindung ermöglicht es, dass wenigstens eine Targetmuster in Abhängigkeit von der aktuellen Position des zu vermessenden Fahrzeugs automatisch an der richtigen Position zu positionieren. Die Positionierung kann auf diese Weise schnell, bequem und mit hoher Genauigkeit durchgeführt werden.

Es werden insbesondere keine zusätzlichen Hilfsmittel, wie z.B. Laser benötigt, um die Targetmuster korrekt auszurichten. Dadurch wird der für den Messplatz benötigte Raum reduziert. Auch Höhenunterschiede können von der Positionierungsvorrichtung berücksichtigt und ausgeglichen werden. Daher ist kein nivellierter Messplatz erforderlich.

In einem Ausführungsbeispiel umfasst die Kalibriervorrichtung auch eine Bewegungsvorrichtung, die ausgebildet ist, das wenigstens eine Targetmuster und/oder die gesamte Kalibriervorrichtung mechanisch zu bewegen. Auf diese Weise kann das wenigstens eine Targetmuster durch mechanisches Bewegen automatisch in einer vorgegebenen Orientierung an einer gewünschten Position positioniert werden.

In einem Ausführungsbeispiel umfasst die Bewegungsvorrichtung wenigstens ein Rad oder eine Rolle, das/die es vereinfacht, das wenigstens eine Targetmuster und/oder die gesamte Kalibriervorrichtung mechanisch zu bewegen.

Das Rad bzw. die Rolle kann insbesondere in wenigstens einer Schiene geführt sein. Durch die Kombination eines Rades bzw. einer Rolle mit einer Schiene können das wenigstens eine Targetmuster und/oder die gesamte Kalibriervorrichtung reibungsarm und mit hoher Präzision in die gewünschte Position geführt werden.

In einem Ausführungsbeispiel ist die Bewegungsvorrichtung ausgebildet, das wenigstens eine Targetmuster um wenigstens eine Achse zu drehen, um das wenigstens eine Targetmuster entsprechend der Ausrichtung des Fahrzeugs auf dem Messplatz exakt in der gewünschten Position und Orientierung auf dem Messplatz anzuordnen.

In einem Ausführungsbeispiel umfasst die Kalibriervorrichtung wenigstens eine elektronische Anzeigevorrichtung, die ausgebildet ist, das wenigstens eine Targetmuster optisch darzustellen.

Die Positionierungsvorrichtung kann insbesondere ausgebildet sein, die Anzeige des wenigstens einen Targetmusters auf der wenigstens einen elektronischen Anzeigevorrichtung zu variieren, um das Targetmuster in einer vorgegebenen Orientierung an einer vorgegebenen Position zu positionieren. In einem Ausführungsbeispiel ist die Positionierungsvorrichtung insbesondere ausgebildet, auch die Größe, die Orientierung und/oder die Position des Targetmusters auf der wenigstens einen elektronischen Anzeigevorrichtung in Abhängigkeit von der Position und der Ausrichtung des Fahrzeugs auf dem Messplatz zu variieren.

Das wenigstens eine Targetmuster kann somit in der benötigten Größe, Ausrichtung und Orientierung dargestellt werden, ohne dass hierfür erforderlich ist, das wenigstens eine Targetmuster oder die Anzeigevorrichtung mechanisch zu bewegen. Eine Kalibriervorrichtung, die wenigstens eine solche elektronische Anzeigevorrichtung umfasst, kann daher besonders einfach, kostengünstig und wartungsarm betrieben werden. Da kein Raum zum Bewegen des wenigstens einen Targetmusters benötigt wird, kann eine solche Anzeigevorrichtung besonders platzsparend realisiert werden.

In einem Ausführungsbeispiel umfasst der wenigstens eine Sensor wenigstens eine Kamera, die ausgebildet ist, das zu vermessende Fahrzeug optisch zu erfassen. Mit Hilfe eines Sensors kann die Position des Fahrzeugs in Bezug auf die Kalibriervorrichtung besonders einfach und bequem bestimmt werden. Die Kamera kann insbesondere als Stereo-Kamera ausgebildet sein, um die Position und Ausrichtung des Fahrzeugs in allen drei Raumrichtungen mit hoher Genauigkeit bestimmen zu können. Es können auch mehrere Kameras und/oder Sensoren vorgesehen sein.

Der wenigstens eine Sensor kann an verschiedenen Positionen, insbesondere auch an der Decke über dem Fahrzeug, angeordnet sein.

Um die Genauigkeit der Kalibrierung zu verbessern und insbesondere Ungenauigkeiten, die sich aus einer Abweichung der Längsfahrachse des Fahrzeugs von der Karosserie-Längsachse ergeben, zu minimieren, können an den Rädern des Hinterachse des Fahrzeugs Radadapter montiert werden, die von wenigstens einer Kamera erfasst werden, um die Ausrichtung der Hinterachse und somit der Längsfahrachse des Fahrzeugs mit hoher Genauigkeit bestimmen zu können.

Alternativ oder zusätzlich kann der Abstand des Fahrzeugs von der Kalibriervorrichtung durch Ultraschallsensoren und/oder durch mechanische Sensoren bestimmt werden. Die Messergebnisse mehrerer Sensoren können miteinander kombiniert werden, um die Genauigkeit der Positionsbestimmung zu verbessern.

In einem Ausführungsbeispiel umfasst ein Verfahren zum Kalibrieren einer Vorrichtung zur Fahrzeugvermessung, eine Markierung, die beispielsweise in Form wenigstens eines Klebepunktes ausgebildet sein kann, an dem Fahrzeug anzubringen, um das automatische Bestimmen der Ausrichtung und Position des Fahrzeugs durch den wenigstens einen Sensor zu vereinfachen und/oder die Genauigkeit zu erhöhen.

Dabei kann das Verfahren insbesondere umfassen, die Markierung an einer Stelle auf der Längsfahrachse des Fahrzeugs, beispielsweise unter dem Rückspiegel auf der Windschutzscheibe des Fahrzeugs, anzubringen.

Ausführungsbeispiele der Erfindung werden im Folgenden anhand der beigefügten Figuren näher erläutert:

### Kurze Beschreibung der Figuren

Figur 1 zeigt eine schematische Draufsicht auf einen Messplatz zur Fahrzeugvermessung mit einer Kalibriervorrichtung gemäß einem ersten Ausführungsbeispiel der Erfindung.
Figur 2 zeigt eine schematische Draufsicht auf einen Messplatz zur Fahrzeugvermessung mit einer Kalibriervorrichtung gemäß einem zweiten Ausführungsbeispiel der Erfindung.
Figur 3 zeigt schematisch die Darstellungen von Targetmustern auf der Anzeigevorrichtung einer Kalibriervorrichtung gemäß dem zweiten Ausführungsbeispiel der Erfindung.

### Figurenbeschreibung

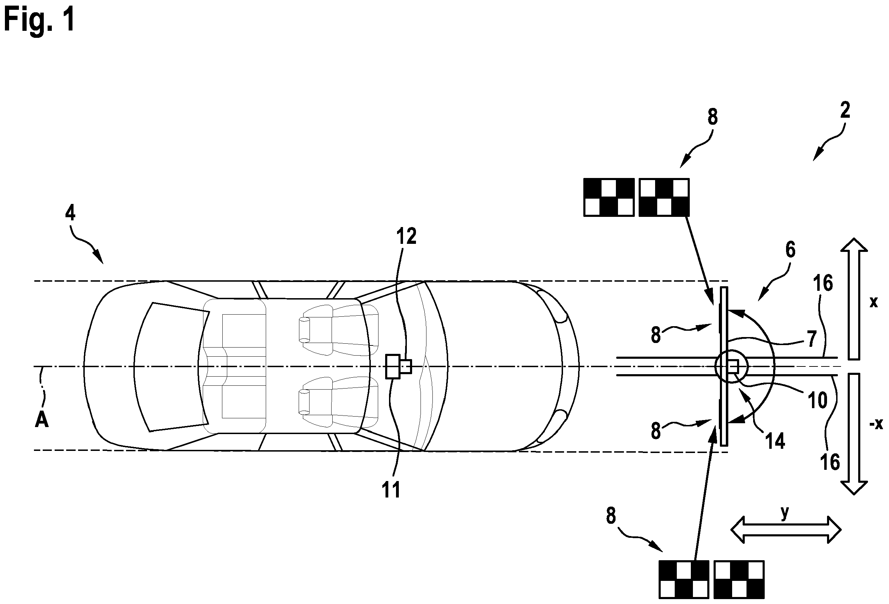

Figur 1 zeigt in einer schematischen Darstellung eine Draufsicht auf einen Messplatz 2 zur Fahrzeugvermessung mit einem zu vermessenden Fahrzeug 4 und einer Kalibriervorrichtung 6 gemäß einem ersten Ausführungsbeispiel der Erfindung.

Die Kalibriervorrichtung 6 weist zwei dem Fahrzeug 4 zugewandte Elemente (Kalibriertafeln) zur Darstellung von Targetmustern 8 auf, die an einem Träger 7 angebracht sind, der sich im Wesentlichen horizontal und orthogonal zur Längsfahrachse A des Fahrzeugs 4 erstreckt.

Die Kalibriertafeln können mechanische Kalibriertafeln sein, auf die statische Targetmuster 8 aufgedruckt sind. Um eine dynamische Kalibrierung zu ermöglichen, können die Kalibriertafeln auch mit variablen Bildanzeigevorrichtungen ausgebildet sein, die es ermöglichen, sowohl statische Targetmuster 8 als auch dynamische Targetmuster 8, insbesondere Fahrspursequenzen, darzustellen. Die variablen Bildanzeigevorrichtungen können insbesondere Bildschirme und/oder Projektoren in Verbindung mit geeigneten Projektionsflächen umfassen.

Der Träger 6 ist um eine Achse B, die orthogonal zur Ebene des Messplatzes 2 ausgerichtet ist, drehbar gelagert. Durch Schwenken um die Achse B kann der Träger 6 rechtwinklig zur Längsfahrachse A des Fahrzeugs 4 ausgerichtet werden. Die Kalibriervorrichtung 6 weist eine Positionierungsvorrichtung 14, die zum Schwenken des Trägers 6 ausgebildet ist, und wenigstens einen Sensor 10 auf, der die Position und die Ausrichtung des Fahrzeugs 4 in Bezug auf die Kalibriervorrichtung 6 erfasst.

Die von dem wenigstens einen Sensor 10 bereit gestellten Daten ermöglichen es der Positionierungsvorrichtung 14, die Targetmuster 8 in der gewünschten Position und Ausrichtung, d.h. mit dem gewünschten Abstand und Winkel, zum Fahrzeug 4 auszurichten. Der Sensor 10 kann insbesondere als Kamera 10 ausgebildet sein.

Alternativ oder zusätzlich zur der in den Figuren gezeigten Anordnung kann der wenigstens eine Sensor 10 auch an anderen Positionen, z.B. an der Decke über dem Fahrzeug 4, angeordnet sein.

An einer definierten Stelle des Fahrzeugs 4, z.B. auf der Längsfahrachse A unterhalb des Rückspiegels 11, kann ein Messtarget 12 angebracht sein, um dem Sensor 10 das Erfassen der Position und Ausrichtung des Fahrzeugs 4 zu erleichtern. Das Messtarget 12 kann z.B. als Klebepunkt 12 ausgebildet sein, der nach Abschluss des Messvorgangs wieder entfernt werden kann.

Die Positionierungsvorrichtung 14 ist darüber hinaus ausgebildet, den Träger 7 und mit ihm die Targetmuster 8 in allen drei Raumrichtungen zu bewegen, um die Targetmuster 8 an den gewünschten Positionen in Bezug auf das Fahrzeug 4 anordnen zu können.

Der Träger 7 und die Targetmuster 8 können insbesondere rechtwinklig zur Längsfahrachse A des Fahrzeugs 4 (x-Achse), parallel zur Längsfahrachse A des Fahrzeugs 4 (y-Achse) und senkrecht zum Boden des Messplatzes 2 (senkrecht zur Zeichenebene der Figur 1) verschoben werden.

Dazu kann die Kalibriervorrichtung 6 insbesondere auf Rädern und/oder Rollen 15 gelagert sein, die es ermöglichen, die Kalibriervorrichtung 6 und damit die Targetmuster 8 im Raum zu verschieben. Die Räder und/oder Rollen 15 können in Schienen 16 geführt sein, die in oder auf dem Boden des Messplatzes 2 ausgebildet sind.

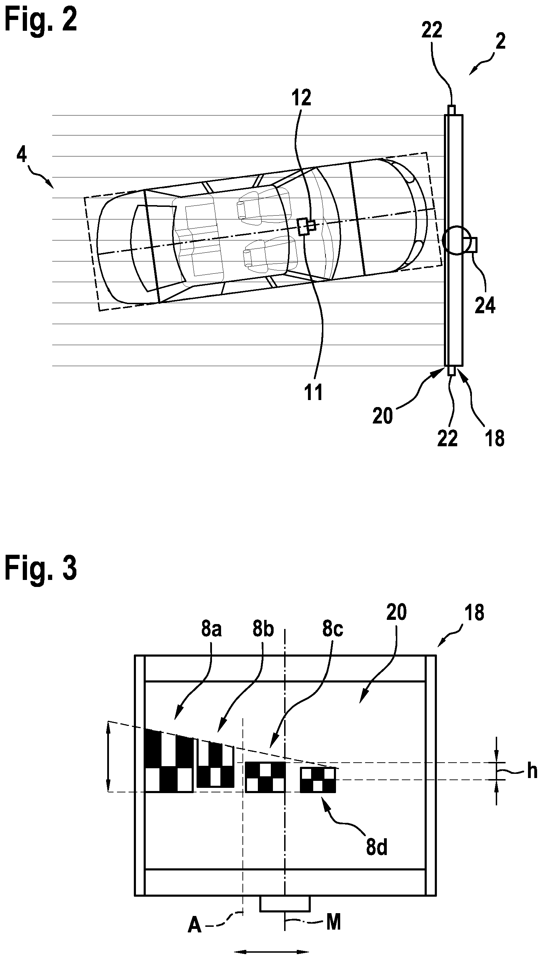

Die Figuren 2 und 3 zeigen schematisch ein zweites Ausführungsbeispiel einer erfindungsgemäßen Kalibriervorrichtung 18.

Eine Kalibriervorrichtung 18 gemäß dem zweiten Ausführungsbeispiel ist stationär angeordnet und weist auf einer dem Fahrzeug 4 zugewandten Seite eine großflächige Anzeigevorrichtung 20 auf, die als Bildschirm und/oder als Projektionsfläche in Kombination mit wenigstens einem (nicht gezeigten) Projektor ausgebildet sein kann. Die Anzeigevorrichtung 20 ist so ausgebildet, dass sie in der Lage ist, Bilder von statischen oder dynamischen Targetmustern 8a-8d verschiedener, insbesondere beliebiger Position, Größe und Orientierung anzuzeigen.

Auch die Kalibriervorrichtung 18 gemäß dem zweiten Ausführungsbeispiel ist mit einem oder mehreren Sensoren 22 ausgestattet, die es ermöglichen, die räumliche Position und Ausrichtung des Fahrzeugs 4 in Bezug auf die Kalibriervorrichtung 18 zu bestimmen.

Auf Grundlage der von dem wenigstens einen Sensor 22 gelieferten Daten berechnet die Positionierungsvorrichtung 16 die passende Position, Größe und Ausrichtung der Targetmuster 8a-8d auf der Anzeigevorrichtung 20. Die Positionierungsvorrichtung 16 steuert die Anzeigevorrichtung 20 so an, dass sie die Targetmuster 8a-8d in der gewünschten Ausrichtung und Größe an den gewünschten Positionen anzeigt.

Figur 3 zeigt in einer schematischen Darstellung vier beispielhafte Darstellungen von Targetmustern 8a-8d.

Von den in der Figur 3 gezeigten Bildern der Targetmuster 8a-8d wird je nach Position und Ausrichtung des Fahrzeugs 4 vor der Kalibriervorrichtung 18 jeweils eines auf jeder Seite der Längsfahrachse A des Fahrzeugs 4 angezeigt.

Eine Kalibriervorrichtung 18 gemäß dem zweiten Ausführungsbeispiel ermöglicht es, eine Verschiebung der Längsfahrachse A des Fahrzeugs 4 gegenüber der Mittelachse M der Anzeigevorrichtung 20 zu berücksichtigen und die Targetmuster 8a-8d entsprechend asymmetrisch zur Mittelachse M der Anzeigevorrichtung 20 anzuzeigen.

Auch unterschiedliche Höhen des Fahrzeugs 4 gegenüber der Kalibriervorrichtung 18, wie sie sich beispielsweise auf einem nicht-nivellierten Messplatz 2 ergeben, können von der Positionierungsvorrichtung 16 durch eine Höhenverschiebung h der Bilder der Targetmuster 8a-8d auf der Anzeigevorrichtung 20 berücksichtigt und ausgeglichen werden.

Ist das Fahrzeug 4, wie in der Figur 2 gezeigt, so angeordnet, dass seine Längachse A nicht orthogonal zur Ebene der Anzeigevorrichtung 20 bzw. der Kalibriervorrichtung 18 ausgerichtet ist, werden die Targetmuster 8a-8b verzerrt dargestellt, um die nicht-orthogonale Ausrichtung des Fahrzeugs 4 gegenüber der Anzeigevorrichtung 20 zu berücksichtigen und die Targetmuster 8a-8b so darzustellen, als wären sie orthogonal zur Längachse A des Fahrzeugs 4 ausgerichtet.

Um eine dynamische Kalibrierung zu ermöglichen, können anstelle statischer Targetmuster 8a-8d auch dynamische Targetmuster, insbesondere Fahrspursequenzen, dargestellt werden.

Durch eine erfindungsgemäße Kalibriervorrichtung 6, 18 wird das Ausrichten der Targetmuster 8, 8a-8d, die bei der Fahrzeugvermessung verwendet werden, erheblich vereinfacht. Durch die automatische Ausrichtung der Targetmuster 8, 8a-8d kann insbesondere erreicht werden, dass die Targetmuster 8, 8a-8d stets mit hoher Präzision zum Fahrzeug 4 ausgerichtet werden.

## Patentansprüche

1. Kalibriervorrichtung (6; 18) zum Kalibrieren von Fahrzeug-Assistenz-Systemen mit:
wenigstens einem Targetmuster (8; 8a-8d);
wenigstens einem Sensor (10; 20), der ausgebildet ist, die Position und Orientierung eines zu vermessenden Fahrzeugs (4) in Bezug auf die Kalibriervorrichtung (6; 18) zu detektieren; und
einer Positionierungsvorrichtung (14; 24), die ausgebildet ist, das wenigstens eine Targetmuster (8; 8a-8d) auf Grundlage der von dem wenigstens einen Sensor (10; 20) detektierten Position des zu vermessenden Fahrzeugs (4) so zu positionieren, dass das wenigstens eine Targetmuster (8; 8a-8d) in Bezug auf das zu vermessende Fahrzeug (4) in einer vorgegebenen Orientierung an einer vorgegebenen Position angeordnet ist.

2. Kalibriervorrichtung (6) nach Anspruch 1, wobei das wenigstens eine Targetmuster (8; 8a-8d) ein statisches Targetmuster (8; 8a-8d) und/oder ein dynamisches Targetmuster (8; 8a-8d), insbesondere eine Fahrspursequenz, umfasst.

3. Kalibriervorrichtung (6) nach Anspruch 1 oder 2, wobei die Kalibriervorrichtung (6) wenigstens eine Bewegungsvorrichtung umfasst, die ausgebildet ist, das Targetmuster (8) und/oder die Kalibriervorrichtung (6) mechanisch zu bewegen, um das Targetmuster (8) in der vorgegebenen Orientierung an der gewünschten Position zu positionieren.

4. Kalibriervorrichtung (6) nach Anspruch 3, wobei die Bewegungsvorrichtung (14) wenigstens ein Rad und/oder eine Rolle (15) umfasst, das/die es ermöglicht, das Targetmuster und/oder die Kalibriervorrichtung (6) mechanisch zu bewegen, wobei das wenigstens eine Rad / die wenigstens eine Rolle (15) insbesondere in wenigstens einer Schiene (16) geführt ist.

5. Kalibriervorrichtung (6) nach Anspruch 3, wobei die Bewegungsvorrichtung (14) ausgebildet ist, das wenigstens eine Targetmuster (8; 8a-8d) um wenigstens eine Achse zu rotieren.

6. Kalibriervorrichtung (18) nach einem der vorangehenden Ansprüche, wobei die Kalibriervorrichtung (18) wenigstens eine elektronische Anzeigevorrichtung (20) umfasst, die ausgebildet ist, das wenigstens eine Targetmuster (8a-8d) optisch anzuzeigen.

7. Kalibriervorrichtung (6; 18) nach Anspruch 5, wobei die Positionierungsvorrichtung (24) ausgebildet ist, die Anzeige des wenigstens einen Targetmusters (8a-8d) auf der wenigstens einen elektronischen Anzeigevorrichtung (20) zu variieren, um das Targetmuster (8a-8d) in der vorgegebenen Orientierung an der vorgegebenen Position zu positionieren, wobei die Positionierungsvorrichtung (24) insbesondere ausgebildet ist, die Größe und/oder die Orientierung und die Position des Targetmuster, Fahrspursequenz (8a-8d) auf der wenigstens einen elektronischen Anzeigevorrichtung (20) zu variieren.

8. Kalibriervorrichtung (6; 18) nach einem der vorangehenden Ansprüche, wobei der wenigstens eine Sensor (10; 20) wenigstens eine Kamera umfasst, die ausgebildet ist, das zu vermessende Fahrzeug (4) optisch zu erfassen.

9. Verfahren zum Kalibrieren von Fahrzeug-Assistenz-Systemen, wobei das Verfahren umfasst:
(a) eine Kalibriervorrichtung (6; 18) nach einem der vorangehenden Ansprüche vor einem zu vermessenden Fahrzeug (4) zu positionieren;
(b) die Position und Orientierung des Fahrzeugs (4) in Bezug auf die Kalibriervorrichtung (6; 18) mit Hilfe des wenigstens einen Sensors (10, 20) zu bestimmen; und
(c) das wenigstens eine Targetmuster (8; 8a-8d) so zu positionieren, dass es in Bezug auf das Fahrzeug (4) in einer vorgegebenen Orientierung an einer vorgegebenen Position angeordnet ist.

10. Verfahren nach Anspruch 9, wobei das Verfahren zusätzlich umfasst, vor dem Schritt (b) eine Markierung (12) an dem Fahrzeug (4) anzubringen, wobei das Verfahren insbesondere umfasst, die Markierung (12) an mindestens einer Stelle auf der Längsfahrachse (A) des Fahrzeugs (4) anzubringen.
